Europäisches Patentamt

European Patent Office

Office européen des brevets

(11) Veröffentlichungsnummer: **0 056 432**
**B1**

(19)

(12) **EUROPÄISCHE PATENTSCHRIFT**

(45) Veröffentlichungstag der Patentschrift:
**23.04.86**

(21) Anmeldenummer: **81108471.4**

(22) Anmeldetag: **17.10.81**

(51) Int. Cl.⁴: **B 60 T 8/34**

(54) Antiblockiersystem, insbesondere für ein Mehrachs-Fahrzeug.

(30) Priorität: **21.01.81 DE 3101731**

(43) Veröffentlichungstag der Anmeldung:
**28.07.82 Patentblatt 82/30**

(45) Bekanntmachung des Hinweises auf die Patenterteilung:
**23.04.86 Patentblatt 86/17**

(84) Benannte Vertragsstaaten:
**AT CH DE FR GB IT LI NL SE**

(56) Entgegenhaltungen:
**DE - A - 2 545 593**
**DE - A - 2 627 284**
**DE - A - 2 750 189**
**GB - A - 1 488 287**

(73) Patentinhaber: **WABCO Westinghouse**
**Fahrzeugbremsen GmbH, Am Lindener**
**Hafen 21 Postfach 91 12 80, D-3000 Hannover 91 (DE)**

(72) Erfinder: **Petersen, Erwin, Dr., Fliederweg 22,**
**D-3050 Wunstorf 1 (DE)**

(74) Vertreter: **Schrödter, Manfred, WABCO Westinghouse**
**Fahrzeugbremsen GmbH Am Lindener**
**Hafen 21 Postfach 91 12 80, D-3000 Hannover 91 (DE)**

## Beschreibung

Die Erfindung bezieht sich auf ein Antiblockiersystem, insbesondere für ein Mehrachs-Fahrzeug gemäss dem Oberbegriff des Patentanspruchs 1.

Es ist bereits bekannt (DE-A-25 45 593, Fig. 4), ein Antiblockiersystem für Strassenfahrzeuge mit zwei Hinterachsen, von denen oft nur eine angetrieben ist, so auszubilden, dass nur die Antriebswelle mit einem Sensor ausgerüstet ist. Dieser Sensor erfasst daher nur das Drehverhalten der angetriebenen Räder. Das Antiblockiersystem bewirkt dann durch entsprechende Regelung des Bremsdruckes, dass ein Blockieren der sensierten Räder verhindert wird. Um auch das Blockieren der nicht sensierten Räder zu verhindern, werden die Bremszylinder dieser Räder mit den Bremszylindern der geregelten Räder verbunden, d.h. pneumatisch mitgesteuert.

Diese Bauart hat jedoch den Nachteil, dass bedingt durch Achs- oder Radlastverlagerungen oder durch Veränderungen der Bremsenkennwerte die mitgesteuerten Räder trotz der durch das Antiblockiersystem bewirkten Bremsdruckabsenkungen blockieren können.

Um diesen Nachteil zu beseitigen, ist weiter bekannt (DE-A-26 27 284, Abb. 4), das Niveau für den Bremsdruck der mitgesteuerten Räder durch eine vorgeschaltete Drossel noch weiter abzusenken. Eine derartige Absenkung kann aber die notwendige gleichmässige Bremsauslegung, insbesondere den gleichmässigen Bremsbelag- und Reifenverschleiss in unerwünschter Weise verstimmen. Da die weit überwiegende Zahl der normalen Bremsungen ungeregelt erfolgt, werden die Bremsbeläge und Reifen der gedrosselt mitgesteuerten Räder zu wenig beansprucht.

Aus der DE-A-27 50 189 ist schliesslich ein Antiblockiersystem bekannt, bei dem für die mitgesteuerte Achse zwischen einem Regelventil und dem Bremsventil ein Rückhalteventil eingefügt ist. Dieses Ventil ist aber nicht schaltbar, so dass es im Normalbetrieb des Fahrzeugs zu einer ungünstigen Veränderung der sonst vorgegebenen Bremskraftverteilung und deshalb zu einer ungleichmässigen Abnutzung der Bremsbeläge von Triebachse und Laufachse kommt.

Ausgehend von diesen Überglegungen liegt der Erfindung die Aufgabe zugrunde, einen gleichmässigen Bremsbelag- und Reifenverschleiss zu erzielen.

Diese Aufgabe wird durch die im Patentanspruch 1 enthaltene Erfindung gelöst.

Durch die Aufhebung der Druckreduzierung bei ungeregelten Bremsungen werden Bremsbeläge und Reifen bei der überwiegenden Zahl der ungeregelten Betriebsbremsungen gleichmässig abgenutzt.

Zweckmässige Weiterbildungen der Erfindung sind in den Unteransprüchen enthalten.

Die Erfindung wird im folgenden anhand von Ausführungsbeispielen, die in einer Zeichnung dargestellt sind, näher erläutert.

Die Zeichnung zeigt in

Fig. 1 ein Blockschaltbild eines Antiblockiersystems für ein Dreiachs-Fahrzeug mit mitgesteuerter dritter Achse,

Fig. 2 ein Blockschaltbild mit einer dritten Achse, welche nach dem Select-Low-Prinzip mitgesteuert ist,

Fig. 3 eine Variante zu Fig. 1 mit einer Mitsteuerung der dritten Achse, die über ein pneumatisch geschaltetes Wegeventil beeinflussbar ist.

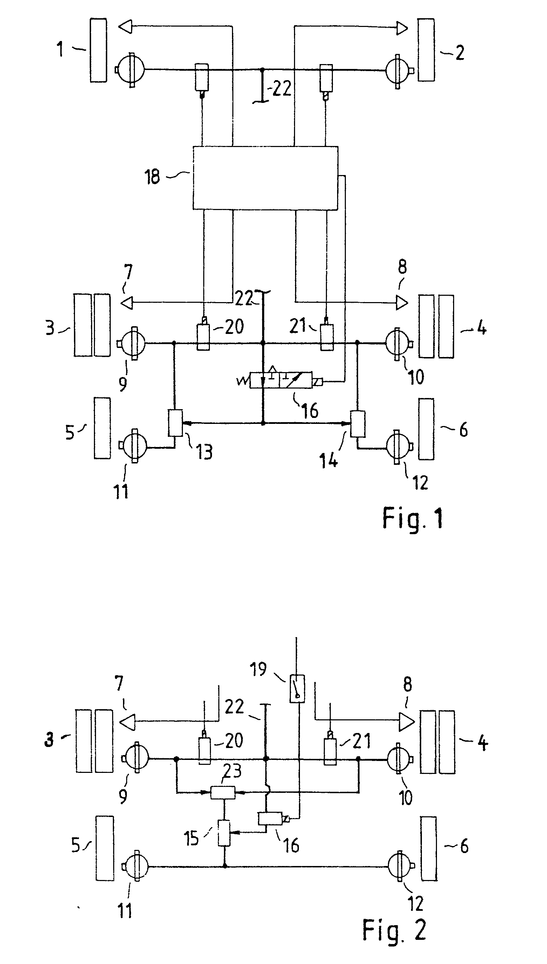

Das in Fig. 1 dargestellte Antiblockiersystem für ein Dreiachs-Fahrzeug besitzt eine Blockierschutz-Elektronik 18, durch welche die Vorderachse mit den Rädern 1, 2 und die erste Hinterachse regelbar sind. Die erste Hinterachse weist Räder 3, 4, Sensoren 7, 8 und Bremszylinder 9, 10 auf.

Die zur Betätigung der Bremszylinder dienende Druckluft wird über eine Bremsleitung 22 zugeführt. Die Bremszylinder 9, 10 werden bei einer geregelten Bremsung durch Regelventile 20, 21, die von der Elektronik 18 angesteuert werden, druckmoduliert.

Die zweite Hinterachse mit den Rädern 5, 6 und den Bremszylindern 11, 12 weist keine eigenen Sensoren auf, sondern wird durch den geregelten Bremsdruck für die Bremszylinder 9, 10 der ersten Hinterachse mitgesteuert. Die Mitsteuerung erfolgt nicht direkt, sondern über Relaisventile 13, 14, mit zwei Steuerflächen. Anstelle derartiger Relaisventile können auch für die lastabhängige Bremsdruckregelung eingesetzte Reduzierventile, sogenannte Last/Leerventile, verwendet werden.

Die Steuerung der Bremszylinder 11, 12 der zweiten Hinterachse erfolgt mittels der Bremsleitung 22 über ein Wegeventil 16. Dieses ist als Magnetventil ausgebildet und wird von der Elektronik 18 derart angesteuert, dass während einer geregelten Bremsung die Ventile 13, 14 den an den Bremszylindern 9, 10 anstehenden Bremsdruck mit einer bestimmten Untersetzung weitergeben. Im Gegensatz dazu wird bei einer ungeregelten Bremsung, also im Normalfall, der an den Bremszylindern 9, 10 anstehende Bremsdruck voll auf die Bremszylinder 11, 12 durchgelassen.

Anstelle der gemeinsamen Ansteuerung der Reduzierventile 13, 14 durch das Wegeventil 16 kann auch eine gesonderte Ansteuerung durch zwei Wegeventile erfolgen (nicht dargestellt). Die beiden Wegeventile können dann nach unterschiedlichen Kriterien durch die Elektronik 18 aktivierbar sein.

In Fig. 2 ist eine Abwandlung des Antiblockiersystems aus Fig. 1 dargestellt, bei welchem die zweite Hinterachse mit den Rädern 5, 6 nach dem Select-Low-Prinzip mitgesteuert wird. Hierzu werden die Bremsdrücke der geregelten Bremszylinder 9, 10 auf ein Wegeventil 23 gegeben. Dieses ist so konstruiert, dass jeweils der niedrigere der beiden eingesteuerten Bremsdrücke weitergegeben wird. Dieser Druck wird über ein Reduzierventil 15, welches wie die Ventile 13, 14 in Fig. 1 gebaut ist, auf die beiden Bremszylinder 11, 12 der zweiten Hinterachse gegeben. Zur Einschaltung der druckuntersetzenden Wirkung des Ventils 15 dient wiederum ein Wegeventil 16, das von der Elektronik 18 wie oben beschrieben angesteuert wird.

Zweckmässig kann in der elektrischen Ansteuerungsleitung für das Magnetventil 16 ein Schalter 19 eingebaut sein. Dieser Schalter 19 dient dazu, bei Fahrzeugen, deren dritte Achse mit den Rädern 5, 6 als Liftachse ausgebildet ist, das Magnetventil 16 dann dauernd einzuschalten, wenn die Liftachse geliftet ist. Hierdurch verringert sich der Luftverbrauch für die Bremszylinder der gelifteten Räder 5, 6 der zweiten Hinterachse.

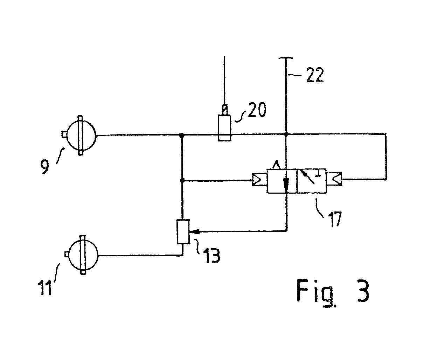

In Fig. 3 ist eine weitere Variante des erfindungsgemässen Antiblockiersystems dargestellt. Der Einfachheit halber ist nur die linke Hälfte gezeichnet. Anstelle eines in Fig. 1 elektrisch durch die Elektronik 18 angesteuerten Ventils 16 ist hier ein pneumatisch geschaltetes Wegeventil 17 eingesetzt. Dieses wird auf der linken Seite durch den geregelten Bremsdruck für den Bremszylinder 9 und auf der rechten Seite durch den ungeregelten Bremsdruck (Leitung 22) angesteuert. Das Ventil 17 steuert durch, solange die beiden Steuerdrücke annähernd gleich gross sind. Dies bedeutet, dass eine ungeregelte Betriebsbremsung vorliegt. In diesem Fall ist auch das Reduzierventil 13 geöffnet, so dass den Bremszylinder 9 und 11 der gleiche Druck zugeführt wird. Im Fall einer geregelten Bremsung steuert dagegen das Ventil 17 um, wodurch bewirkt wird, dass durch das Ventil 13 dem Bremszylinder 11 der zweiten Hinterachse ein untersetzter Druck geliefert wird. Das Ventil 17 muss in diesem Fall, wie auch in der vorher beschriebenen Ausführung 16, aus Sicherheitsgründen so ausgebildet sein, dass im Ruhezustand, d.h. ohne Ansteuerung, der Bremsdruck ungehindert durchgesteuert wird.


**Patentansprüche**

1. Antiblockiersystem, insbesondere für ein Mehrachs-Fahrzeug, mit mindestens einer sensierten und einer nicht sensierten Achse, wobei die Räder (5, 6) der nicht sensierten Achse durch den geregelten Bremsdruck für die sensierte Achse mitgesteuert werden, und den Bremszylindern (11, 12) der nicht sensierten Achse ein druckreduzierendes Ventil (13, 14, 15) vorgeschaltet ist, gekennzeichnet durch folgendes Merkmal: es ist eine Einrichtung (16, 17) vorgesehen, welche die Druckreduzierung bei ungeregelten Bremsungen aufhebt.

2. Antiblockiersystem nach Anspruch 1, dadurch gekennzeichnet, dass die Einrichtung (16, 17) ein Magnetventil (16) ist (Fig. 1, 2).

3. Antiblockiersystem nach Anspruch 1, dadurch gekennzeichnet, dass die Einrichtung (16, 17) ein pneumatisch geschaltetes Wegeventil (17) ist (Fig. 3).

4. Antiblockiersystem nach Anspruch 2, dadurch gekennzeichnet, dass das Magnetventil (16) durch ein Signal einer Blockierschutz-Elektronik (18) schaltbar ist.

5. Antiblockiersystem nach Anspruch 1, 2, 4 für ein Fahrzeug mit Liftachse, dadurch gekennzeichnet, dass im Ansteuerkreis des Magnetventils (16) ein beim Liften der Liftachse betätigter Schalter (19) liegt.

6. Antiblockiersystem nach Anspruch 1, dadurch gekennzeichnet, dass das druckreduzierende Ventil (13, 14, 15) ein Relaisventil mit zwei Steuerflächen ist, von denen ein über eine Wegeventil (16, 17) an eine Bremsleitung (22) und die andere an den Ausgang eines Regelventils (20, 21) angeschlossen ist.


**Claims**

1. Anti-lock system, especially for a multi-axle vehicle, having at least one axle with a sensor and one without a sensor, the wheels (5, 6) of the axle without the sensor being co-controlled by the regulated brake pressure for the axle with the sensor, and a pressure-reducing valve (13, 14, 15) being connected upstream of the brake cylinders (11, 12) of the axle without the sensor, characterised by the following feature: a device (16, 17) is provided which cancels pressure reduction in the case of unregulated braking.

2. Anti-lock system according to claim 1, characterised in that the device (16, 17) is a solenoid valve (16) (Fig. 1, 2).

3. Anti-lock system according to claim 1, characterised in that the device (16, 17) is a directional control valve (17) which is switched pneumatically (Fig. 3).

4. Anti-lock system according to claim 2, characterised in that the solenoid valve (16) can be switched by a signal from an electronic lock-control device (18).

5. Anti-lock system according to claims 1, 2 and 4 for a vehicle having a lift axle, characterised in that a switch (19) which is actuated when the lift axle is lifted is situated in the drive circuit of the solenoid valve (16).

6. Anti-lock system according to claim 1, characterised in that the pressure-reducing valve (13, 14, 15) is a relay valve having two control surfaces, of which one is connected via a directional control valve (16, 17) to a brake line (22) and the other is connected to the outlet of a control valve (20, 21).


**Revendications**

1. Système antiblocage, destiné en particulier à un véhicule à plusieurs essieux et comprenant au moins un essieu sans capteur et un essieu avec capteur, les roues (5, 6) de l'essieu sans capteur étant commandées en parallèle par la pression de freinage réglée de l'essieu avec capteur, et un détendeur (13, 14, 15) étant disposé en amont des cylindres de frein (11, 12) de l'essieu sans capteur, ledit système étant caractérisé par un dispositif (16, 17) qui supprime la réduction de pression pour les freinages non réglés.

2. Système antiblocage selon revendication 1, caractérisé en ce que le dispositif (16, 17) est une valve électromagnétique (16) (figures 1, 2).

3. Système antiblocage selon revendication 1, caractérisé en ce que le dispositif (16, 17) est un distributeur à commande pneumatique (17) (figure 3).

4. Système antiblocage selon revendication 2, caractérisé en ce que la valve électromagnétique (16) est commutable par un signal d'une électronique antiblocage (18).

5. Système antiblocage selon revendications 1, 2, 4 pour un véhicule à essieu relevable, caractérisé en ce que le circuit de commmande de la valve électromagnétique (16) contient un interrupteur (19) actionné lors du relevage de l'essieu relevable.

6. Système antiblocage selon revendication 1, caractérisé en ce que le détendeur (13, 14, 15) est une valve relais à deux faces de commande, dont une est reliée à une conduite de freinage (22) par un distributeur (16, 17) et l'autre à la sortie d'une valve de régulation (20, 21).

Fig. 1

Fig. 2

Fig. 3